# EUROPEAN PATENT APPLICATION

(11) **EP 1 526 116 A1**
(43) Date of publication of application: **27.04.2005**
(21) Application number: 03292605.7
(22) Date of filing: 20.10.2003
(51) Int. Cl.: C02F 1/28, A23J 1/20, A23J 1/00, A23J 3/34, A23K 1/08, A23K 1/10, A23K 1/175

(54) **Method for the isolation of biologically active substances from by-product or waste flows, and biologically active substances obtained therefrom**

(71) Applicant: Boulis, Yannick, 35370 Argentré-du-Plessis (FR)
(72) Inventor: Boulis, Yannick, 35370 Argentré-du-Plessis (FR)
(74) Representative: Thurgood, Alexander John

(57) **Abstract**

The present invention relates to method for the isolation of at least one biologically active substance from an industrial by-product or waste flow, comprising :
- selecting at least one industrial waste or by-product flow containing at least one biologically active substance ;
- bringing the at least one industrial waste or by-product flow into contact with at least one solid insoluble support material for sufficient time to cause the at least one biologically active substance to selectively adsorb on said support material ;
- recovering the insoluble solid support material carrying the adsorbed at least one biologically active substance.

## Description

The present invention relates to a process for the separation and isolation of biologically active substances from by-product or secondary waste flows. Many industrial processes, such as chemical, agrochemical, and food processes, generate significant amounts of currently unavoidable by-products or waste products. These products must be handled according to legislation that is becoming ever stricter, which often implies a non-negligible cost. One way of recovering that extra cost that the industrialist has to pay, is by attempting to exploit or to find some value added material within the waste or by-product. Unfortunately, such cases are relatively rare on the whole, since the economics of any extra processing steps necessary to retrieve the material are generally unfavorable with respect to value that can be gained from such material. This is especially true of the food industry, where industrial costs have to be kept as low as possible, in order to maintain economic viability of the general food production processes.

Generally speaking, by- and waste products of the food industry are handled in the following manner:
- separation from the by-product or waste product of all solid, or soluble, mineral or organic matter using classical effluent treatment technology such as sedimentation tanks;
- drying to a greater or lesser degree, in order to eliminate the liquid fraction and only retain the solid fractions in one or several steps. This or these step(s) is (are) extremely costly, in view of the overall consumption of energy involved ;
- fractionating the remaining waste, typically via chromatography, an expensive technique used to find several kinds of very specific molecules for which niche markets exist that can support the increased cost of production.

In many cases, however, little or no value-added exploitation can occur, either because the by-product or waste product has a too low concentration in dry matter, or on the other hand, because the waste or by-product is extremely unstable and perishable, and thus unsuitable for storage for a time sufficient to retreat it.

An example of a branch of the food industry faced with such difficulties is that relating to dairy product manufacture and treatment. Most dairy products start out from a bulk volume, low cost, starting material, namely milk. This starting material is available in very large quantities and the initial transformation steps, such as protein precipitation, filtration, or heat treatment are considered to form part of the well established economic environment in this field, simply because of the immense volumes involved. However, other products and by-products can also be made starting from milk. One such by-product is whey, which again can be transformed into further value added products. Exemplary value added products obtained from whey would be, for example, whey proteins, whey protein concentrate or hydrolysate, β-lactoglobulin, and α-lactalbumin, phosphopeptides, casein proteins, caseinomacropeptides, immunoglobulins and the like. Unfortunately, these further processing steps are not viable on a large scale, simply because of the high cost of the further technological steps that are currently required to produce these products.

Typically, the processes used in creating value-added products from milk waste or by-products goes through whey, separated from the curds of the milk. Two major techniques are used today :
- filtration, including microfiltration, ultrafiltration, and nanofiltration ;
- finer separation techniques such as chromatography or electrophoresis.

In these cases, chromatography is generally considered by far the best in terms of pure performance, and is used for the recovery of molecules such as lactoferrin, lactoperoxydase, glycomacropeptides ou simple fragments thereof. In view of the expense of such relatively small scale techniques, most of the applications envisaged are niche markets, such as infant nutrition formulas, sport nutrition formulas, body building formulas, and specialized dietary supplements for the aged.

From the above, one can conclude that there is a long felt need in general to provide a large scale or scalable, cost effective, means of treating industrial waste or by-product flows in order to provide an economic way of dealing with such waste or by-product, whilst at the same time providing a value added substance that has other significant applications.

One object of the present invention is therefore to provide such a low cost, industrially scalable method for the isolation of biologically active substances from by-product or waste flows. Another object of the invention is to provide for biologically active substances obtained via such a method.

Still yet another object of the present invention is to provide for a biologically active complex in which a biologically active substance obtained via the method of the present invention is used.

Other objects may become apparent through the reading of the description and claims.

In the following specification and claims, the following terms have the meaning assigned to them here below :
- "by-product or waste flow" is a substantially liquid fraction that is generated during the different steps of industrial processing of a product, and in particular a food product;
- "substantially liquid" means that the fraction contains at most 30 % b y weight of dry matter;
- "biologically active substance" means any chemical entity that has an overall physiological effect on the subject to which it is administered ;
- "biologically active complex" means the association of one or more biologically active substances, as defined above, with a support vehicle, that may or may not have an overall physiological effect on the subject to which it is administered in addition to the biologically active substance ;
- "solid support material" is a natural or synthetic insoluble mineral based solid, that is chemically inert, and having molecular adsorptive capacity. Such a material can be present as a powder, granules, flakes, or chips. Suitable supports can be chosen from diatomaceous earths, zeolites, active carbons, perlites, kaolins, mineral clays, montmorillonites, bentonites, attapulgites, and the like.

Particularly preferred solid support materials can be chosen from the group consisting of :
- CBR3, CBR, CBL3, CBL, DiCB, Acticarbone 3S, Acticarbone CXV, Clarsol STF, Clarsol KC1, Clarsol KC2, Clarsol ATC Na, all available from CECA, France ;
- Perlite 4258, Perlite 478, Perlite 438, commonly available ;
- Kaolin Arvolite SP20, Kaolin 7 ASP20, Kaolin Berrien B SP20, Kaolin Laude SP20, all available from Denain Anzin Minéraux, France ;
- Sialite, Metasial, Sokalite, all available from Soka, France ;
- Kaolin K13, Sand HN 38, Sand S26, Sand S36, all available from Sika, France.

Accordingly, one object of the invention is a method for the isolation of at least one biologically active substance from an industrial by-product or waste flow, comprising :
- selecting at least one industrial waste or by-product flow containing at least one biologically active substance;
- bringing the at least one industrial waste or by-product flow into contact with at least one solid insoluble support material for sufficient time to cause the at least one biologically active substance to selectively adsorb on said support material ;
- recovering the insoluble solid support material carrying the adsorbed at least one biologically active substance.

Preferably, the at least one industrial waste or by-product flow is substantially liquid.

Even more preferably, the at least one industrial waste or by-product flow comprises not more than 30% by weight of dry matter.

In accordance with the present invention, the at least one industrial waste or by-product flow is preferably generated or supplied from an industrial process that processes or manufactures an organic product. In this case, the organic product can be of animal or plant origin. This means that the method of the present invention can be used for treating waste flows and by-products from a number of industries, and more particularly from the group of industries consisting of a sewage plant, a waste water processing plant, a sugar processing plant, in particular a sugar beet processing plant, a cheese manufacture, a milk processing plant, a meat processing plant, an egg-breaking plant, a fruit processing plant, an oil processing plant, a wine producing plant, a paper processing plant, an algae processing plant, and a brewery. Such plants produce huge volumes of liquid or semi-liquid waste or by-product flows, in which many biologically active substances can be found. Most preferably, however, the at least one industrial waste or by-product flow is milk or derived from milk. The milk industry produces huge amounts of liquid waste or by-products such as whey, that contain very interesting biologically active substances, but which with todays current processing techniques require great efforts to isolate and recover them, at great expense, with the result that the products thereby obtained can only be sold in niche markets with perceived high added value. The method of the present invention manages to solve this problem by producing a workable, industrially scalable alternative, that is also very economic, both in the components used, as in the installation and running requirements. Consequently, in one of the most preferred embodiments, the at least one industrial waste or by-product flow is whey.

In yet another preferred embodiment, the at least one solid insoluble support material and the at least one industrial waste or by-product flow are agitated together after being brought into contact one with the other. The conditions of operation will depend on the type and molecular weight of active substance being recovered from the waste flow. Such conditions can be determined by one skilled in the art, so as to arrive at a system where one can scan a waste product flow for all possible biologically active molecules of interest, and then adapt the adsorption conditions, in a further cycle for example, to retain only those specific molecules that are desired.

The method of the present invention can, for example, be made to function as a small plug-in unit that is connected to the main processing flows of the industrial plant and produces a value added secondary or tertiary material with potential applications in human and animal health and nutrition. In addition, the method of the invention reduces the volumes that need to be dried subsequent to isolation of the biologically active substance, thereby causing further economies of scale to be obtained in heating and energy costs.

The unit can for example comprise a chamber, having a solid support material inlet, and a conduit either for the introduction, or the flow through, of the at least one waste flow or by-product. The chamber can also optionally be provided with agitation means, and temperature regulation means. Naturally, the chamber will also be provided with outlets for both the adsorbed biologically active substance/support material complex, and the remaining waste liquid that is now poorer or depleted in molecules of interest and can either be passed through the chamber once again, or dispatched for disposal. In an industrial plant, one could easily foresee the provision of several cycles through the unit, or the provision of multiple chambers, operating in cascade or parallel, each having a different set of operating conditions to specifically adsorb, and optionally specifically desorb any given biologically active substance from the at least one solid insoluble support material. A final optional step, but one that may be advantageous for the preparation of pharmaceutical, or human or animal health preparations, is the isolation of the at least one biologically active substance from the at least one solid insoluble support material. This can be achieved by the desorption step for example, or could be followed by other refining or purifying techniques that are known to the skilled person such as chromatography.

The invention also therefore provides for a method of screening industrial waste or by-product flows for new biologically active molecules of interest.

Preferably, the at least one biologically active substance is selected from the group consisting of hormones, proteins, peptides, polypeptides, antibodies, glycoproteins, glycosaminoglycans, and enzymes. Even more preferably, the at least one biologically active substance has a biological activity selected from the group consisting of antibiotic, probiotic, anti-microbial, anti-fungal, cell growth regulation, neurogenerative, oestrogenic, anti-thrombotic, anti-viral, free radical and metal ions scavengers, immuno-modulatory, anti atherogenic, anti-inflammatory.

A further object of the invention, is the provision of a complex obtainable from a process as defined previously, wherein the complex comprises at least one solid insoluble support material on which is adsorbed at least one biologically active substance. The complex preferably has a biological activity selected from the group consisting of antibiotic, probiotic, anti-microbial, anti-fungal, cell growth regulation, neurogenerative, oestrogenic, anti-thrombotic, anti-viral, free radical and metal ion scavengers, immuno-modulatory, anti atherogenic, anti-inflammatory.

Still yet another object is an animal feedstock composition comprising a complex as defined previously. In a most preferred embodiment, the complex has antimicrobial activity. In this way, the complex can be used as a substitute for feedstocks that currently contain antibiotics and which will soon be forbidden for use in agricultural animal nutrition. The antimicrobial activity of the feedstock of the present invention will act as a therapeutic solution to minor infections that some agricultural animals tend to suffer from, e.g. poultry, pigs, sheep and cattle.

Finally, it is most preferred that the at least one biologically active substance be a substance naturally present in the at least one industrial waste or by-product, i.e. that it not be a substance that has resulted from the addition by man to the mainstream product or to the animal that created the starting materials for the mainstream product. This of course extends to substances that are introduced b y genetic manipulation.

### BRIEF DESCRIPTION OF THE FIGURES

Figure 1 represents Coomassie Blue stained SDS PAGE runs of proteins of interest in whey adsorbed onto and desorbed from a selection of solid support materials in accordance with the method of the present invention ;
Figure 2 represents Coomassie Blue stained SDS PAGE runs of proteins of interest in whey adsorbed onto and desorbed from a selection of solid support materials different to those of Figure 1 ;

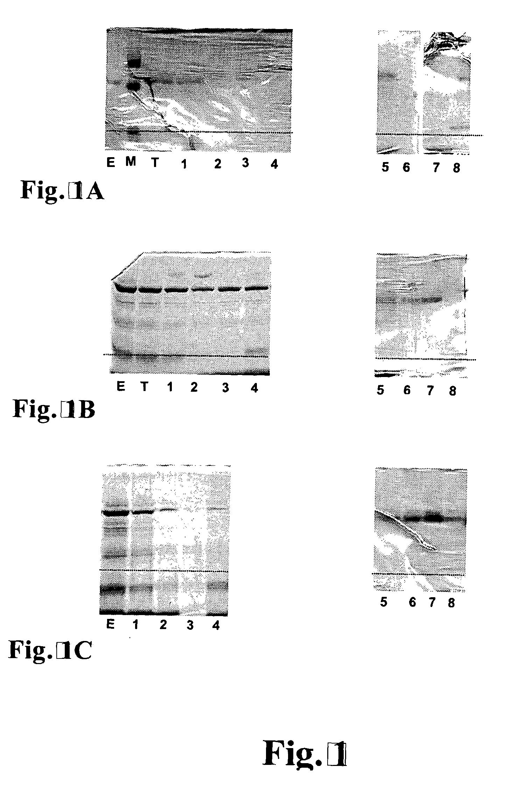

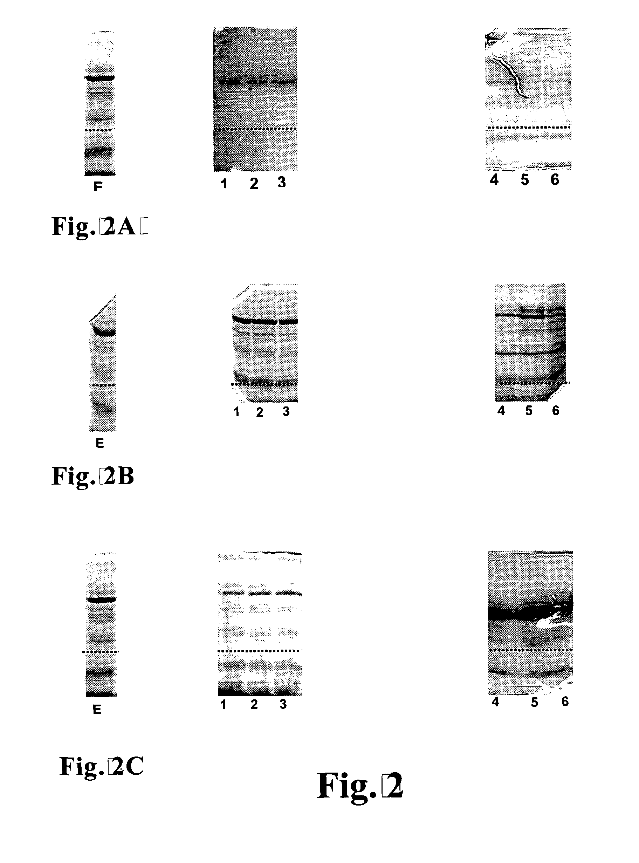

Where the following meaning is given to the symbols in the figures 1 and 2 :
In Figure 1, E = the initial sample, M = a molecular weight marker, T = control, 1 = STF, 2 = KC1, 3 = KC2, 4 = ATC Na, 5 = STF, 6 = KC1, and 7 = KC2 ;
In Figure 2, E = initial sample, 1 = sialite, 2 = metasial C, 3 = sokalite powder, 4 = sialite, 5 = metasial C, 6 = sokalite powder;

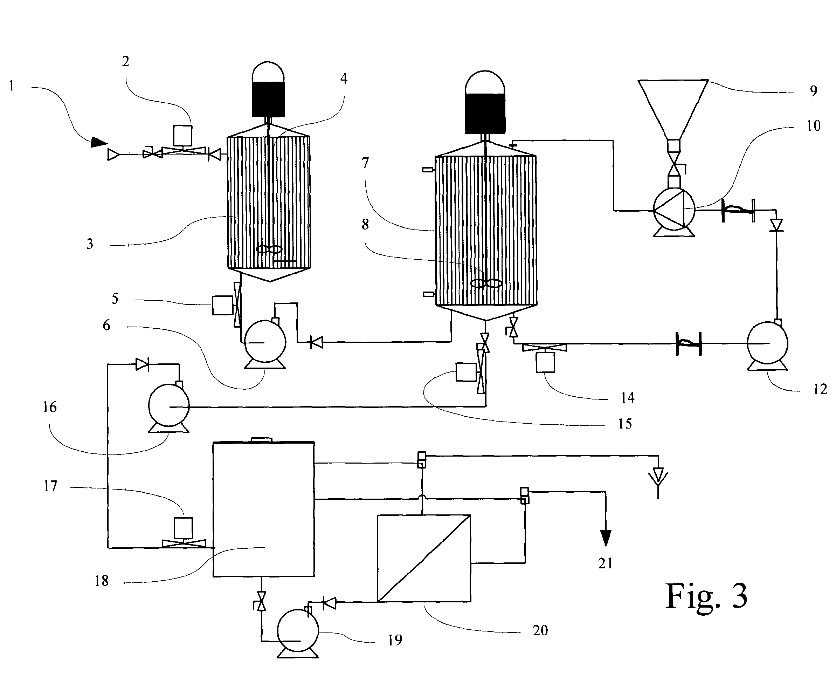

Figure 3 is a schematic representation of the implementation of the process of the invention in an industrial environment.

### DETAILED DESCRIPTION OF PREFERRED EMBODIMENTS

The invention will be further described and explained by the following examples, that are given for the purposes of illustrating some of the preferred embodiments of the present invention, in particular in relation to the recovery of biologically substances of interest from the well known agro-industrial by-product known as whey.

### Examples

### Example 1

Whey preparation

The control whey is obtained from fermented milk (Ribot milk™, sold by BRIDEL, France), and simulates whey obtained from cheese manufacturing plants during the manufacture of fresh cheese from cow's milk or certain cow's milk based soft cheeses.

The fermented milk is centrifuged at 6000 g for 20 minutes. The precipitate obtained, that is made up mainly of caseins and caseinates, was eliminated ; the supernatant was collected and made up the control whey sample.

Two types of fermented milk were used :
1. low fat type (low in fats) ;
2. whole fat or creamy (rich in fats).

The pH of each whey obtained was measured and found to be approximately p H 4.6.

For some of the examples, the pH was adjusted to pH 6.8, by the addition of 0.5M aqueous sodium hydroxide NaOH, in order to simulate sweet whey, and in order to limit the effects of dilution of the starting material. Other aqueous hydroxides could also be optionally be used instead of NaOH, but the latter is most often used in the milk industry.

Unless indicated otherwise, 25 millilitres of each whey was taken as the starting material, and the solid support material concentration was 2% (w/v). After addition of the support material to the whey, the mixture was agitated, for example on an agitation table, for an hour. The mixture was then filtered on a Büchner filter, using a Whatman #4 filter paper. The solid and liquid fractions obtained after filtration were stored at -20°C for further analysis.

The various different solid support materials used were as follows in Table 1:

**Table 1**

| Product Name | Supplier | Numbe |
|---|---|---|
| CBR3 | CECA | 1 |
| CBR | CECA | 2 |
| CBL3 | CECA | 3 |
| CBL | CECA | 4 |
| kaolin | Sigma | 5 |
| Perlite 4258 | - | 6 |
| Perlite 478 | - | 7 |
| Perlite 438 | - | 8 |
| DiCB | CECA | 9 |
| Acticarbone 3S | CECA | 10 |
| Acticarbone CXV | CECA | 11 |
| Argile verte | Argiletz | 12 |
| Talc | Burchet Dano | 13 |
| Clarsol STF | CECA | 14 |
| Clarsol KC1 | CECA | 15 |
| Clarsol KC2 | CECA | 16 |
| Clarsol ATC Na | CECA | 17 |
| Kaolin Arvolite SP20 | Denain Anzin Minéraux | 18 |
| Kaolin 7 ASP20 | Denain Anzin Minéraux | 19 |
| Kaolin Berrien B SP20 | Denain Anzin Minéraux | 20 |
| Kaolin Laude SP20 | Denain Anzin Minéraux | 21 |
| Sialite | SOKA | 22 |
| Metasial C | SOKA | 23 |
| Sokalite poudre | SOKA | 24 |
| Kaolin K13 | SIKA | 25 |
| Sable HN 38 | SIKA | 26 |
| Sable S26 | S IKA | 27 |
| Sable S36 | SIKA | 28 |

### Biochemical Analysis

The solid support materials that were tested, either with or without prior treatment, are brought into contact with a solution that simulates an agroindustry effluent or by-product that contains one or more biologically active substances of interest.

Insofar as the experimental parameters are concerned, for example, contact times, type and degree of agitation, etc., these are adjusted to in order to modulate the adsorption and selectivity of the solid insoluble support material for the biologically active substances of interest. After solid-liquid separation, two fractions are obtained :
1. a solid fraction comprising the solid support material that is more or less loaded with biologically active substances of interest, and particularly with proteins ; and
2. a liquid fraction that has a lower protein content.

The obtained fractions are analysed using a gel electrophoresis technique known as SDS-PAGE, which involves separating out proteins based on their respective molecular masses, followed by staining. The SDS-PAGE technique enables identification of all of the proteins present in a given sample and provides a visualisation of their distribution in each fraction, when compared to the starting sample analysed. The liquid fraction can be analysed as it is after the solid-liquid separation step, i.e. directly after adsorption. The solid fraction, on the other hand, is put into solution with what is known to the skilled in the art as a "loading" buffer, and brought to the boil. Such drastic conditions enable all of the adsorbed proteins to be desorbed, but are not representative of the enzymatic or temperature conditions prevalent in the normal digestive tract, rumen or stomach.

In the figures, the dotted line delimits two areas, with the proteins of interest being located in the area above the dotted line. In the examples given, these proteins are substantially immunoglobulins and lactoferrin. The area below the dotted line is that in which unwanted residual caseins and low molecular weight proteins such as α-lactalbumin and β-lactoglobulin are to be found, which have molecular weights at about 16 to 18 kDa. These latter kind of molecules are not of interest in the present invention.

SDS-PAGE method and analysis conditions.

The following stock solutions were used :
Denaturing buffer 5X (5 mL)
   SDS 10% (500 mg)
   β-mercaptoethanol 25% (1.25 mL)
   Bromophenol blue 0.1 % (2 mg)
   glycerol 15% 750 mg
   QSP 5 mL H₂O
Separation buffer, or lower buffer, (50 mL)
   TRIS 9.075 g
   SDS 0.2 g
   QSP H₂O 50 mL
   Adjust pH to 8.8 avec HCl 1 M
Concentration buffer or upper buffer (25 mL)
   TRIS 1.5 g
   SDS 0.1 g
   QSP H₂O 25 mL
   Adjust pH to 6.8 avec HCl 1 M
Migration buffer 10X (200 mL)
   TRIS 6 g
   Glycine 28.8 g
   SDS 2 g
   QSP H₂O 200 mL
APS 10% (1 mL)
   APS (ammonium persulfate powder) 100 mg
   QSP H₂O 1 mL

The polyacrylamide gels were prepared as follows :

### Separation Gel

| | 10% |
|---|---|
| Acrylamide 30% | 3.3 mL |
| TRIS HCl pH 8.8 | 2.5 mL |
| H2O | 4.1 mL |
| APS 10% | 40 L |
| Temed | 3 L |

### Concentration Gel

| | 4% |
|---|---|
| Acrylamide 30% | 0.67 mL |
| TRIS HCl pH 6.8 | 0.63 mL |
| H₂O | 3.6 mL |
| APS 10% | 50 µL |
| Temed | 5 µL |

The samples were adjusted to a total protein concentration of approximately 1 mg/mL, by the addition of a volume of loading buffer i.e. sufficient to obtain a concentration that is ready to load of 1 mg/mL. The volume actually loaded onto the gel was comprised between about 25 µl and about 30 µL per well.

Electrophoresis was carried out under the following conditions: concentration gel at 60V, then separation gel at 190 V, with migration lasting approximately 45 minutes. After migration was stopped, the gels were stained with Coomassie blue and then dried.

### Example 2

The sample used was a low fat whey, the pH of which had been adjusted to between 4.6 to 6.8 by the addition of 0.5 M NaOH.

The results for the solid insoluble support materials 14, 15, 16 and 17 are given **in** Figure 1 A, with lanes 1, 2, 3 and 4 representing adsorption, and lanes 5, 6, 7 and 8 respectively representing desorption.

The four solid insoluble support materials tested all had high adsorptive capacity, cf. A1, but especially A2, A3 and A4. However, desorption, even under drastic conditions, was low, cf. A5 to A8. Support number 15, a clarsol KC1 did show a slight difference in the desorption profile compared to the others, the uppermost band being separating out slightly higher, which indicated the desorption of a protein of higher molecular mass.

### Example 3

The sample tested was a whole fat whey, the pH of which was adjusted to between 4.6 to 6.8 by the addition 0.5M NaOH. The results of solid insoluble supports numbered 14, 15, 16 and 17 are given in Figure 1B, with adsorption being represented in lanes 1, 2, 3 and 4, and desorption being represented in lanes 5, 6, 7 and 8 respectively. A few significant differences can be seen depending on the nature of the solid insoluble support material, in particular for KC 1 (B2) and KC2 (B3). For KC1 (support n°15), one can see that the bands corresponding to a low molecular weight have disappeared, when compared to the adsorption of this protein on the support in B2. For KC2 (support n°16), this result is also observed, but further included the absorption of a high molecular weight protein, since the band that was visible in B3 also disappeared. Adsorptive capacity is thus generally low under these experimental conditions, with little or few differences between the initial sample in E and lanes B1 to B4. To summarize, adsorptive capacity is low, but despite this, a slight difference in the profiles between clarsols KC1 and KC2 is noticed, with certain bands appearing to be more intense than for the two other supports B6 and B7.

### Example 4

The sample used was a low fat whey, the pH was not adjusted and was naturally close to 4.6. The results of solid support materials 14, 15, 16 and 17 are given in Figure 1C, with adsorption being represented in lanes 1, 2, 3 and 4, and desorption being represented respectively in lanes 5, 6, 7 and 8. Here one can observe that adsorption differs greatly depending on the solid insoluble support material used. It is low for STF (C1 ), medium for KC1 and ATC Na (C2 and C4) and strong for KC2, in which there is almost complete disappearance of the bands, as shown in C3. Desorption, on the other hand, is very high for KC2 (C7), with the presence of a single very intense band in the upper area, indicating a very high selectivity upon desorption, and intermediate for KC1(C6) and finally relatively weal for STF and ATC Na (C5 and C8). The difference in behaviour upon desorption appears to be linked to the degree of adsorption that took place beforehand. As has been shown, depending on the final experimental parameters used, adsorption, desorption and corresponding selectivity can be modulated greatly. The four solid insoluble support materials all behave in a generally similar way. However , clarsol KC1 and especially clarsol KC2 show some noticeable differences in behaviour, which are visible both after adsorption (B2, B3 and C3) and desorption (B6, B7 and C7).

### Example 5

The sample used was a low fat whey, the pH of which had been adjusted to about 4.6 to 6.8 by the addition of 0.5 M NaOH.

The results of support materials numbered 22, 23 and 24 are presented in Figure 2A, with adsorption being represented by lanes 1, 2 and 3 respectively, and desorption being represented by lanes 4, 5 and 6. The three support materials tested all demonstrated a high adsorptive capacity (A1, A2 and A3). Desorption, even under extreme conditions, was low (A4, A5 and A6). Metasial C (support n°23) displayed a slight difference in its desorption profile (A6), in that the upper band was slightly higher, indicative of the desorption of a protein with higher molecular weight.

### Example 6

The sample tested was a whole fat whey, the pH of which was adjusted to between 4.6 to 6.8 by addition of 0.5M NaOH. The results for support materials 22, 23 and 24 are given in Figure 2B, whereby adsorption is represented in lanes 1, 2 and 3, respectively, and desorption is represented in lanes 4, 5 and 6. Whichever material was used, no significant difference was observed (B1, B2 and B3). Adsorptive capacity is low under the experimental conditions used, with little difference between the starting sample and lanes B1 to B3. However, the desorptive capacity is good. Despite low adsorption, the desorbed fractions were all enriched (B5, B6 and B7), whereby some bands appeared to be more intense than in the starting material. Here once again, Metasial C (support n°23) showed a slightly different profile (B5), in that some bands appeared to be more intense than for the two other support materials (B4 and B6).

### Example 7

The sample used was a low fat whey, the pH was not adjusted and was naturally close to 4.6. The results of support materials numbered 22, 23 and 24 are shown in Figure 2C, with adsorption being given in lanes 1, 2 and 3, and desorption in lanes 4, 5 and 6 respectively. Adsorption is intermediate when compared to the conditions used in A and B. Many bands are present in the fractions C1, C2 and C3, but are generally of a lower intensity than the starting sample. Desorption is very high (C4, C5 and C6), with the presence of a very intense band in the upper area (very high selectivity for the corresponding protein). Under these conditions, no significant difference was observed between the three support materials (C4, C5 and C6). It can thus be concluded that depending on the final experimental parameters used, adsorption, desorption and selectivity can be modulated in an important way. The three support materials behave in a virtually identical manner. However, Metasial C shows some differences in behaviour, that are especially noticeable upon desorption (A5 and B5).

### Example 8

### Microbiology

### Sample selection

The samples of example 7 were those that showed the most interesting desorption profile, with high desorption of proteins having a molecular weight within the target area being searched for. An in vitro test was carried out on these samples to show that the complex obtained had antimicrobial activity.

### Mother Culture Preparation

The bacterial strain used was a strain of E. Coli. This strain was maintained in culture in a Luria-Bertani medium having the following composition : bactopeptone 10 g/L, yeast extract 5 g/L, sodium chloride 5 g/L, prepared in purified water. The culture conditions were as follows : temperature 37°C, agitation 250 rpm on an agitating table, period between reseeding : 24 hours.

At T=0 (where T equals time), an aliquot was thawed. Reseeding was carried out at 2% (v/v) in Luria-Bertani medium. At T=24 hours and 48 hours, a further reseeding at 2% was carried out. The culture at T=48 hours was taken for the experiments, since by this time, the culture had reached the exponential growth phase.

### Preliminary tests

The analytical method used was reading from a spectrophotometer at a wavelength of 565 nm. In a non-inoculated medium, one of either whey n°1 or whey n°2 was added, in order to test whether the endogenous bacteria would not develop in these experimental conditions, and thereby lead to inaccurate results. Under the conditions given, no bacterial growth was observed.

### Control experiments

Several control experiments were carried out in addition to the main experiment involving the complex comprising the solid support material and biologically active substance plus seeded medium (A) :
- B) whey + seeded medium : check for antimicrobial activity of whey on its own ;
- C) seeded medium : bacterial growth control ;
- D) seeded medium + solid insoluble support material alone : effect of the solid support material on its own on bacterial growth ;
- E) solid insoluble support material alone + LB medium : test for an eventual effect of a non-sterile support material ;
- F) complex + LB medium : test for an eventual effect of a non-sterile complex.

In a glass tube with a diameter of 1.7 mm, 0.1 mL (i.e. 2% v/v) of culture was added to 5 mL of LB media placed within the tube. The culture had reached its exponential growth phase (T=0h). 10 mg of product was added, whereby the product was the complex, or a whey powder, to give a weight of 0.2% (w/v). A collection of tubes prepared in the same way with different solid insoluble support materials was agitated at 250 rpm and maintained at at temperature of 37°C. Optical density measurements were taken at regular intervals, for example after 1, 3, 5, and 22 hours respectively via spectrophotometry, using a wavelength of 565 nm, in order to check for bacterial growth.

### Calculation method

The results given in Table 2 were obtained after subtraction of the optical density of the supports (D-E) or of complex (A-F), in the LB medium and then compared to the control set up (C) and a whey control (B). Only the values for T=5 hours and T= 22 hours are shown in the table. The optical densities read at T=1 hour and T=3 hours did not show any significant differences, since they correspond essentially to the beginning of bacterial growth.

Subtraction of the values is necessary, since bacterial concentration is linked to the turbidity of the seeded medium, and in parallel, the addition of the solid insoluble support material also generates some turbidity that needs to be deducted in order to have the optical density that is directly linked to bacterial growth.

**Table 2**

| Samples | OD (T=5 h) | OD (T=22 h) |
|---|---|---|
| Growth Control (C) | 0.93 | 1.30 |
| Sialite | | |
| Support (D-E) | 0.11 | 0.41 |
| Complex (A-F) | 0.03 | 0.08 |
| Metasial C | | |
| Support (D-E) | 0.28 | 0.61 |
| Complex (A-F) | 0.08 | 0.72 |
| Sokalite powder | | |
| Support (D-E) | 0.05 | 0.59 |
| Complex (A-F) | NA | 0.11 |
| Whey control (B) | 1.06 | 1.58 |

### Discussion

Control C shows that in the culture conditions used, a strong rate of bacterial growth was observed.

Control B, obtained by the addition of lyophilized whey powder, shows that, on its own, whey has no inhibiting effect on bacterial growth. On the contrary, the addition of powdered whey seems to have the opposite effect, i.e. stimulate bacterial growth, probably because it is very rich in lactose.

The solid insoluble support materials on their limit microbial growth. At T=5 hours, the results obtained for sialite, metasial C and sokalite powder are respectively 11.8%, 30.1% and 5.4%, compared to the control growth (100%). At T=22 hours, the same measurements gave values of 31.5%, 46.9% and 45,8%. Thus the solid support material on its own has an inhibiting effect on bacterial growth particularly at the beginning of microbial cell growth.

For the complexes formed according to the invention, growth was in general slowed, with an amplified effect. At T=5 hours, the results for the complexes containing sialite and metasial C were respectively 3.2% and 8.6% compared to the growth control (100%). At T=22 hours, these values had reached 6.1 %, 55.4% and 8.5% respectively.

Although the complex containing metasial C seems to be quite a good inhibitor at the beginning of bacterial growth, the value obtained at T=22 hours would lead one to believe that its inhibitory capacity is in fact similar to that measured for the insoluble solid support alone, and that therefore adsorption of proteins from whey does not lead to increased anti-microbial activity.

However, for sialite and powdered sokalite, strong anti-microbial activity is observed at both T=5 hours and T=22 hours, with an inhibition greater than 90% . Thus the adsorption of proteins from whey, as a waste effluent of the milk industry enables not only amplification of the antimicrobial activity, but also enables this activity to be presenf for longer, as had been already observed with the solid support materials on their own.

It is thus likely that the complexes formed according to the present invention have bacteriostatic properties.

### Further studies

### Selection of the bacterial strain

The first set of tests were carried out on a strain known as *E. Coli.* (gram -). In order to validate the theory behind the invention, other strains were tested. These strains were *Staphylococcus Epidermidis* (gram +) and *Lrsteria Innocua,* the latter often being used to emulate the behaviour of *Listeria monocytogenes,* but without the precautions necessary to manipulate the monocytogenes strain.

Other tests were carried out to discover the mechanism of action of the complexes according to the present invention, to determine whether the complexes were "concentration dependent" or "time dependent".

### Analytical Method

The results were confirmed through the use of another analytical method, in order to demonstrate that they were not biased by the experimental conditions. Tests were thus carried out on a gelose media, and visible colony counting.

In the same manner, the initial analytical method used was challenged by adopting a different method. The addition of the solid support, or the formation of a particular complex leads to the risk biasing the values obtained. For the concentration of solid support material used and tested, approximately 0.2%, the samples were homogenized by centrifugation at low speed for 5 seconds. For other concentrations, however, for example at 1% concentration, i.e. 50 mg, this simple step was insufficient to obtain a homogeneous sample in which the OD could be said to be representative. The inventors therefore resorted to a visual observation of the turbidity of the samples.

As has been mentioned above, the process or method of the present invention is designed to solve the problem of waste, effluent or by-product flows of organic material that are generated in certain kinds of industry, for example, the dairy industry through a industrially economically viable method of recovering biologically active substances from said waste or by-product flows. Figure 3 shows a schematic representation of how the process according to the present invention can be implemented into an existing industrial food production unit, and more specifically into a cheese manufacture production line. During cheese production, whey is produced as a by-product, generally indicated on Figure 3 by the reference numeral 1. The whey is pumped and collected into a storage vessel 3. The tank 3 also includes agitation means, such as a stirrer 4, to keep the whey homogenized. The homogenized whey is then pumped through an automatic rotary valve 5 via a centrifugal pump 6 and into a reactor vessel 7 that will enable the selective absorption and desorption of required biologically active substances in accordance with the present invention, and equipped with agitation means, for example, a stirrer 8. The reactor vessel 7 is connected to a hopper 9 and a metering pump 10. The hopper 9 is loaded with solid insoluble support material that is added to the reactor vessel 7 via the metering pump 10. Other means of transporting and feeding the solid insoluble support material, could be for example, by using a conveyor system. The mixture of whey and insoluble solid support material is stirred continuously and at the necessary optimal conditions and length of time required for the desired biologically active substance or substances to be adsorbed onto the solid support material. Once adsorption is complete or has been maximized, the mixture of whey and solid insoluble support material is fed via a centrifugal pump 16 and a automatic rotary valve 17 through an accumulator vessel 18 into a solid/liquid separation system 20. The accumulator vessel 18 recirculates the mixture, and enables the system to be operated until optimal filtration conditions are reached, thereby ensuring consistency in the results obtained. In the separation system 20, the solid and liquid phases are separated one from the other, leaving a solid phase that is as dry as possible. It is noted that the solid support material now contains the biologically active substances absorbed onto it. The solid thus produced is then dried using more conventional techniques, such as via a concentrator, evaporator, flash dryer, spray dryer, atomizer and the like.

## Claims

1. Method for the isolation of at least one biologically active substance from an industrial by-product or waste flow, comprising :
- selecting at least one industrial waste or by-product flow containing at least one biologically active substance ;
- bringing the at least one industrial waste or by-product flow into contact with at least one solid insoluble support material for sufficient time to cause the at least one biologically active substance to selectively adsorb on said support material ;
- recovering the insoluble solid support material carrying the adsorbed at least one biologically active substance.

2. Method according to claim 1 wherein the at least one industrial waste or by-product flow is substantially liquid.

3. Method according to any one of claim 1 or claim 2, wherein the at least one industrial waste or by-product flow comprises not more than 30% by weight of dry matter.

4. Method according to any one of the preceding claims, wherein the at least one industrial waste or by-product flow is generated or supplied from an industrial process that processes or manufactures an organic product.

5. Method according to any one of the preceding claims, wherein the organic product is of animal or plant origin.

6. Method according to any one of the preceding claims, wherein the industrial waste or by-product flow is generated by or supplied from the group of industries consisting of a sewage plant, a waste water processing plant, a sugar processing plant, in particular a sugar beet processing plant, a cheese manufacture, a milk processing plant, a meat processing plant, an egg-breaking plant, a fruit processing plant, an oil processing plant, a wine producing plant, a paper processing plant, an algae processing plant, and a brewery.

7. Method according to any one of the preceding claims, wherein the at least one industrial waste or by-product flow is milk or derived from milk.

8. Method according to any one of the preceding claims, wherein the at least one industrial waste or by-product flow is whey.

9. Method according to any one of the preceding claims, wherein the at least one solid insoluble support material and the at least one industrial waste or b-product flow are agitated together after being brought into contact one with the other.

10. Method according to any one of the preceding claims, wherein the at least one biologically active substance is caused to subsequently selectively desorb from the at least one solid insoluble support material.

11. Method according to any one of the preceding claims, wherein the at least one biologically active substance is isolated from the at least one solid insoluble support material.

12. Method according to any one of the preceding claims, wherein the at least one biologically active substance is selected from the group consisting of hormones, proteins, peptides, polypeptides, antibodies, glycoproteins, glycosaminoglycans, and enzymes.

13. Method according to any one of the preceding claims, wherein the at least one biologically active substance has a biological activity selected from the group consisting of antibiotic, probiotic, anti-microbial, anti-fungal, cell growth regulation , neurogenerative, oestrogenic, anti-thrombotic, anti-viral, free radical and metal ions scavengers, immuno-modulatory, anti atherogenic, anti-inflammatory.

14. Complex obtainable from a process according to any one of claims 1 to 13, wherein the complex comprises at least one solid insoluble support material on which is adsorbed at least one biologically active substance.

15. Complex according to claim 14, wherein the complex has a biological activity selected from the group consisting of antibiotic, probiotic, anti-microbial, anti-fungal, cell growth regulation , neurogenerative, oestrogenic, anti-thrombotic, anti-viral, free radical and metal ions scavengers, immuno-modulatory, anti atherogenic, anti-inflammatory.

16. Animal feedstock composition, wherein the composition comprises a complex according to any one of claims 14 or 15.

17. Animal feedstock composition according to claim 16, wherein the complex has antimicrobial activity.

18. Method according to any one of claims 1 to 13, wherein the at least one biologically active substance is a substance naturally present in the at least one industrial waste or by-product.
